(19) Europäisches Patentamt / European Patent Office / Office européen des brevets

(11) **EP 2 219 097 A1**

(12) **EUROPEAN PATENT APPLICATION**

(43) Date of publication:
18.08.2010 Bulletin 2010/33

(51) Int Cl.:
*G06F 3/01* (2006.01)   *G06F 3/042* (2006.01)

(21) Application number: 09152867.9

(22) Date of filing: 13.02.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicant: ECOLE POLYTECHNIQUE FEDERALE DE LAUSANNE (EPFL)
1015 Lausanne (CH)

(72) Inventors:
• **Kaplan, Frédéric**
  **1260 Nyon (CH)**
• **Besuchet, Jonathan**
  **1005 Lausanne (CH)**

(74) Representative: **Wenger, Joel-Théophile**
**Leman Consulting S.A.**
**Chemin de Précossy 31**
**1260 Nyon (CH)**

(54) **Man-machine interface method executed by an interactive device**

(57)    The aim of the present invention is to provide a cost effective solution for a man-machine interface without physical contact with the device to which a command should be given.

This aim is achieved by a Man-machine interface method executed by an interactive device, comprising a display, an infra-red camera, an infra-red illumination system, this method executing the following steps :
- capturing a first image by the camera with infra-red illumination
- capturing a second image by the camera without infra-red illumination
- Subtracting the two images to create a difference image
- Creating a movement map using a high-pass filter to filter-out static part on a plurality of difference images
- computing a barycentre of at least one region of the movement map,
- Assigning at least one cursor based on the position of the barycentre movement,
- Modifying information on the display based on the position of this cursor..

Figure 1

## Description

### Introduction

From programming languages to the desktop metaphor, from mouse and keyboard to new accelerometer based game controllers, computer interfaces show a strong tendencies towards control systems that are closer to the body, taking advantages of our basic sensorimotor skills more than our high-level cognitive competences. One of the ultimate goal of this trend would be an interface systems directly controllable by body movements and gesture without the need to wear or hold any special devices. To approach this goal, the computer must be able to perceive the body of the user in motion.

This invention features a simple way to control computer interfaces, alternative to the traditional mouse and keyboard systems. It is also suited for new interaction systems equipped with a screen or a projection system. The present invention permits among other things to interact with gestures with a device at various distances (roughly up to 5 meters, this limit being determined by the size of the display, the resolution of the camera, and the intensity of the infra-red illumination system (see below)) and without the need of any additional devices to wear or hold, such as gloves. As the method do not make any assumption concerning colors or textures (no use of skin-color detection method), the user can use any part of his body to interact (not only his hands).

More specifically, this invention enables the user to control **one** or **several "cursors"** at various distances from the display. These cursors share similarities with the pointers usually controlled by computer mouses in graphical user interfaces. Typical possible interactions that can performed at a distance using this device and method including :

- Browsing into a list of items (e.g. browse a set of albums or songs)

- Selecting an item within this list (e.g. select an album or a song)

- Launching different commands (e.g. play/pause/next/previous/...)

- Controlling different settings of an application (e.g. volume)

- Moving, drag and dropping graphical objects.

- Drawing

- Playing various kinds of games

This list is given as illustration purpose but is not exhaustive.

The present invention can, for instance, be used to control a TV, a game console or a digital frame. In addition, this invention can be used to perform gestural commands **involving several devices or objects in the same room**, if at least one of these devices is equipped with the system and if the position of the others is known or discoverable by the system. For instance the system can be used to transfer a photo displayed on a TV monitor to a digital frame by performing a pointing gesture in front of the TV and in the direction of the digital frame.

### Background Art

Previous systems featuring gesture based interaction were based on three kinds of techniques : 3D camera, standard camera associated special machine vision techniques and dedicated controllers that the user must wear or hold in his hand.

**(3D Cameras)** In the recent years, progresses have been made towards **3D cameras.** Perceiving depth can be an efficient way to construct a gesture-based interaction system. The most common devices used to be stereovision systems using disparity images from **two calibrated camera** to evaluated depth. Other methods used **laser-scanning techniques.** More recently, "Time-of-flight" camera uses **a specific image sensor** associated with an active illumination unit emitting light pulses or high-speed modulation. The special image sensor measures directly the depth for each pixel based on the reflection delay of the active illumination. All these methods rely on intrinsically complex hardware design.

**(Machine vision technique with standard cameras)** Some methods use standard camera associated with particular machine vision techniques either based on movement or explicit modeling of the human body. These techniques are not robust to change in light condition or movement happening in the background of the scene.

**(Dedicated controllers)** Another line of research has focused on the gestural interaction using **special devices** such as **gloves** or dedicated **controllers** typically using accelerometer sensors. These devices permits to capture the movement of the user precisely but the user needs to hold or wear the dedicated device.

## A Description of the device and method

The aim of the present invention is to provide a cost effective solution for a man-machine interface without physical contact with the device to which a command should be given.

This aim is achieved by a Man-machine interface method executed by an interactive device, comprising a display, an infra-red camera, an infra-red illumination system, this method executing the following steps :

- capturing a first image by the camera with infra-red illumination

- capturing a second image by the camera without infra-red illumination

- Subtracting the two images to create a difference image

- Creating a movement map using a high-pass filter to filter-out static part on a plurality of difference images

- computing a barycentre of at least one region of the movement map,

- Assigning at least one cursor based on the position of the barycentre movement,

- Modifying information on the display based on the position of this cursor.

The present invention introduces an alternative **device** and **method** based on active infra-red illumination and associated computerized treatment permitting robust gestural interaction in front of display. Compared to existing methods :

- It uses only **one** camera (unlike the two camera needed for stereovision techniques)

- This camera is based on a **normal CCD sensor** (unlike the specific sensor need for the time-of-flight principle)

- The user does not need to wear gloves or another type of controllers.

- The method works in many different lighting conditions and filters out movement happening in the background of the scene (unlike vision based technique using normal cameras)

In terms of hardware the invention relies on a standard CCD camera equipped with an infra-red filter, several infra-red light emitting diodes (LEDs) and an electronic circuitry to actively control the LEDs. This kind of system can be integrated into a stand-alone movable sensor that can be put on top or under a display (e.g. a TV monitor). Alternatively, the system can be integrated in the structure of the display itself for instance by organizing the LEDs around the display like a frame.

## Brief description of the figures

The present invention will be better understood that to the attached figures in which :

- Figure 1 : Summary of the 3 step process permitting to associate a cursor and a trajectory to an image,

- Figure 2: Different basic components for gesture based interaction

- Figure 3: Different interactions involving physical objects or persons

- Figure 4: Extension to the case of a direction adjustable system. The system can build a map of the position of the different objects in the pan-tile space and interpret movement relatively to this map.

## Detailed description of the invention

The invention permits to associate in real time to the movement of the user, one or several cursors. The process to create this cursor follows three consecutive steps

## A.1 Step 1: Background extraction based on active illumination and image subtraction

The purpose of this first step is to suppress the background information of an image to focus on the elements that are closer to the device (the user or a close object). The method is the following.

- The system captures two consecutives images using a camera equipped with an infra-red filter: one with IR red illumination and one without.

- The image without infra-red is then "subtracted" to the image with infra-red illumination. The resulting image is the equivalent of an image taken in the absence of any other light sources than the ones emitted by the device itself. In particular all the Infra-red components present in normal sunlight are filtered out.

Each pixel Xn of the image can be computed in the following way:

$$Xn = X_{IR} - X_{nonIR}$$

This step permits to suppress in practice all the information which are distant (hence not illuminated) from the device. One exception is the case of highly reflecting materials that despite their distance reflect the Infra-red illumination of the device. To filter out these elements the method has to perform a second step.

Notes :

a. In principle, active illumination in Step 1 can be performed also with non-IR light. The advantage of IR light is that it is invisible to the human eyes.

b. This method exploits the correlation linking the distance of the object with its intensity in the IR image. As previously mentioned the intensity also depends on the reflectivity of the illuminated objects. Nevertheless, for an object with a constant reflectivity, this evolution of the intensity locally approximates the depth profile of the object and therefore this information can be used to have a rough 3d mapping.

## A.2 Step 2: High-pass filter to remove static elements of the image

The objective of this second step is to filter out all the static (hence non interactive) elements of the scene. A crude way of removing static elements is simply to subtract two consecutive images Xn et Xn-1 and take the absolute value of the resulting image. More generally, this corresponds to the implementation of a high-pass filter on the image. A possible implementation of such a filter is the following

$$Yn = alpha * Yn\text{-}1 + alpha * abs(Xn - Xn\text{-}1)$$

n: the time/step index; Xn: the current image from Step1; Xn-1: the previous image from Step 1; and abs(x) is the absolute value of x

Yn: the current resulting image of Step 2; Yn-1: the previous resulting image of Step 2;

$\alpha$: a parameter which control the cut-off frequency of the filter between 0 and 1.

A large alpha (close to 1) implies that Yn will decay very slowly (Nevertheless, if Xn stays constant (Xn-Xn-1 = 0) then Yn will ultimately decays to Zero). A small alpha implies that Yn will decay quickly. Because it requires fast changes to have high value it tends to quickly forget its prior output values.

Alternatively, instead of using the absolute value the following function can be used

$$Yn = alpha * Yn\text{-}1 \ + alpha * f(Xn - Xn\text{-}1)$$

Where f(x) = x if x>0

And f(x) = 0 otherwise

The resulting image can then be thresholded (if Yn < TH Yn = 0, Yn = 1 otherwise) to extract the most important moving elements in the scene that are close to the display.

**A.3 Step 3: Extraction of one or several point(s) of control (cursor(s)) and movement trajectories**

The last step consists in extracting useful information from a control point of view.

**A.3.1 Several methods to assign a cursor position to teach image after step2**

From the image obtained after step 2 (thresholded or not), various methods can be used to get the equivalent of a cursor. For all these methods it is useful to compute the barycenter of points of the image obtained after step 2. The position of the barycenter can be obtained by the following formula

$$Bary = \frac{\sum_i Yn(y_i) * y_i}{\sum_i Yn(y_i)}$$

Where Bary is the 2 dimensional vector corresponding to the coordinate of the barycenter" y_i are the two dimensional points of the image Yn and Yn(y_i) their corresponding values on the image.
Alternatively this computation can be done on the thresholded image.
Based on this barycenter, various methods can be used to assign a cursor.

- The cursor can be the barycenter itself.

- The cursor can be a point in a predefined region near the barycenter which value is above a given threshold and which position is either the most peripheral from the center of the display or arbitrarily the highest, the lowest or the points the most of the right or on the left.

- The cursor can be a point in a predefined region near the barycenter which intensity is the highest.

- The cursor can be a point in a predefined region near the barycenter which has the maximum velocity. This point is generally psychologically perceived as being the focus of attention in a moving image.

- The cursor can be a point in a predefined region near the barycenter the most distant from the position of the user, assuming that this position is available (e.g. the face of the user has been detected). Again this tends to be an approximation of the point of maximum velocity.

**A.3.2 Multiple cursors**

In addition, instead of performing the various computations mentioned in A.3.1 on the entire image, it is possible to find only the local maxima of several subparts (i.e regions) of the image and to assign to each region a cursor. For instance, it is possible to associate to a bimanual gesture of the user two cursors, one corresponding to each hand. Different methods can be used to do this assignment

A.3.2.1 Arbitrary divisions of the area of interaction

It is possible to divide into several regions the area of the interaction. For instance the interaction area can be divided into two regions divided by a vertical line corresponding to the middle of the display. Alternatively, this division can be based on the user's position provided that the position of the user is known : gestures on the right and the left of the user can be discriminated using this method and associated to two independent trajectories

A.3.2.2 Clustering methods

To assign cursors based on the movement map (obtained after step 2), a clustering method **M** can be applied directly on the points of the image. This clustering method will group points into a number **k** of clusters, in order to optimize a given criteria (typically minimizing the average distance between the point in the cluster and the center of the cluster or another quality criteria (see below)). Several clustering methods can be applied. All these methods are iterative and based on a stopping criteria. As illustration, we describe two of them below.

**Possible Clustering Method 1 : k-mean algorithm**

A simple algorithm to do this clustering is the following:

-    initialize the centroids of the k clusters randomly

-    while the stopping criteria is not met

    -    Assign to each point to the cluster which centroid is the closest

    -    recompute the centroids

**Possible Clustering Method 2 : EM algorithm**

Another general clustering method is based statistical model called finite mixture. A mixture is a set of k probability distributions, representing k clusters. In the case of Gaussian distributions, each distribution D is determined by two parameters its mean **mu_D** and its standard deviation **sigma_D.** If we know that x_1, x_2 ... x_n belong to the cluster D, mu_D and sigma_D can be computed easily as the mean and standard deviation of each of the component of the points.

$$\mu_D = \frac{x_1 + .. + x_n}{n}$$

$$\sigma_D^2 = \frac{(x_1 - \mu_D)^2 + .. + (x_n - \mu_D)^2}{n-1}$$

If we know mu and sigma for the different clusters, it is easy to compute the probabilities that a given instance comes from each distribution. Given an instance x, the probability that it belongs to cluster D is :

$$Pr[D/x] = \frac{Pr[x/D].Pr[D])}{Pr[x]} = \frac{f(x; \mu_D, \sigma_D).Pr[D])}{Pr[x]}$$

where $f(x; \mu_D, \sigma_D)$ is the normal distribution function for cluster D

$$f(x; \mu_D, \sigma_D) = \frac{1}{\sqrt{2\pi}\sigma_D} \exp \frac{-(x - \mu_D)^2}{2.\sigma_D^2}$$

Given an initial set of distributions, the first step of this algorithm is the calculation of the cluster probabilities (the "expected" class values). The second step is the calculation of the distribution parameters by the "maximization" of the likelihood of the distributions given the data. These two steps are iterated.

For the estimation of mu_D and sigma_D, a slight adjustment must be made compared to previous equations due to the fact that only cluster probabilities, not the clusters themselves, known for each instance. These probabilities act like weights.

$$\mu_D = \frac{w_1.x_1 + .. + w_n.x_n}{w_1 + .. + w_n}$$

$$\sigma_D^2 = \frac{w_1.(x_1 - \mu_D)^2 + .. + w_n.(x_n - \mu_D)^2}{w_1 + .. + w_n}$$

where the x_i are now all the instances and w_i is the probability that instance i belongs to cluster D.

The overall likelihood of a distribution set is obtained by multiplying the probabilities of the individual instances i:

$$Q = \prod_i \sum_D p_D.Pr[x_i/D]$$

where Pr[x_i / D] is determined from f(x_i ;mu_D,sigma_D).

Q is an indicator of the quality of the distribution. Q increases at each iteration of the algoirthm. The algorithm stops when he increase of the log-likelihood becomes negligible (e.g. less than $10^{-10}$ increase for ten successive iterations).

This algorithm is guaranteed to converge to a maximum but not necessary to the global maximum. The algorithm could be repeated several times, with a different initial configuration. By varying the number of clusters k, it is possible to determine the one which maximize Q and thus the "natural" number of clusters.

In the present case, it is also possible to iterate the process over consecutive images.

The mean of each cluster can be used directly as a cursor and the standard deviation gives an indication of the size of the corresponding region.

**Determining the number of cluster k**

Although the last method described can be used with different values of k to determine the one leading to the best number of clusters, it also possible to have other heuristics to determine whether the one or more cursors should be looked at. Some of these heuristics are application dependent (e.g. a given application may not allow bi-manual gestures, so k should be set to 1 or one the contrary impose bi-manual manipulation). Others are based on the interpretation of the context (e.g. the presence of a face in the image gives an indication of the position of the users which gives constraints on the number of clusters than can be used).

**A.3.3 Mean filter to smooth the trajectory of the "cursor"**

To smooth the trajectory of this (these) cursor(s) a mean filter taking for instance the mean position of the last n (typically 5) positions can be used. This smoothed cursor will be more resilient to various "noises" but will follow with a certain delay the position of the cursor computed directly from the movement map.

In this smoothing process, it is possible to assign different weights to the different points of the trajectory, giving more importance for instance to the most recent points.

### A.3.4 Displaying the cursors and the trajectories.

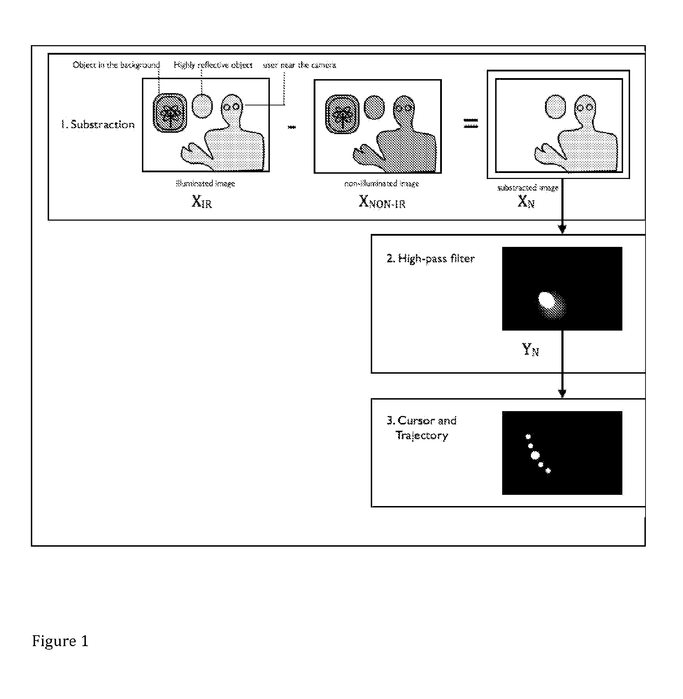

These different steps permit to obtain a set of points of control (cursors) and corresponding movement trajectories (the position of the cursors in time (either based on directly on the cursor or based on its smoothed version as computed in A.3.3). see Figure 1 for a summary).

These elements are the basis of several interface components described below (They can displayed in various manners on the screen.

- (Frame of reference of the camera) Displaying directly an image based on the camera images and keeping a one-to-one aspect ratio compared to the image to display cursors and trajectories on top of it. Various kinds of filters and graphical operations can be used to alter the image to give an aesthetically pleasing look to the interface.

- (Frame of reference of the user) If the user is detected, for instance with face detection, it is possible to "zoom" on the user and display the cursors and trajectory in this new frame of reference. This can permit to interact from more far away.

### General note:

It is possible to constraint the search for cursors in a smaller region than the entire image. For instance if a user is detected the search could limit itself to a predefined area surrounding the user.

### B Description of some basic components for gesture-based interaction

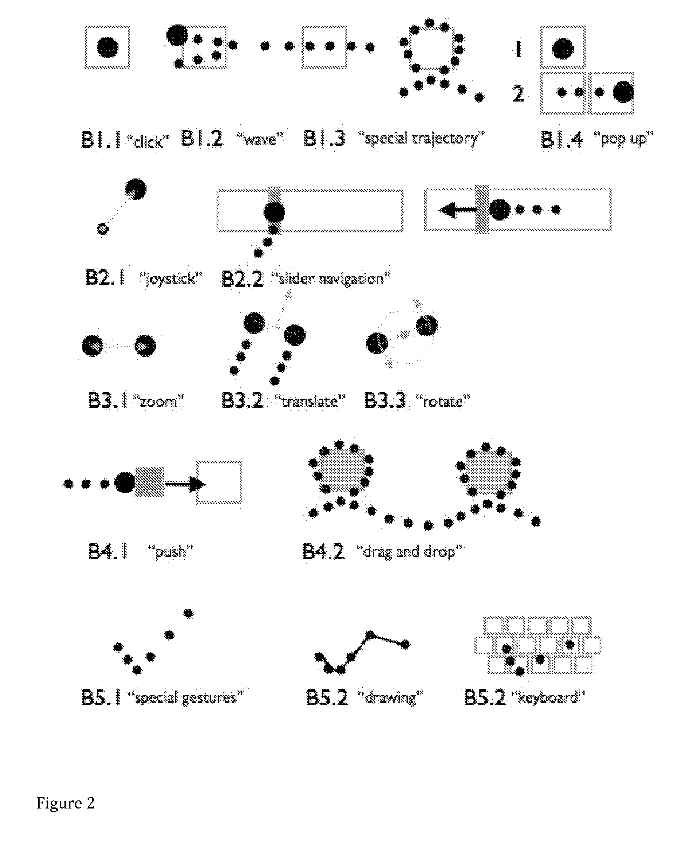

This section describes how several basic components used in Graphical User Interface can be adapted to be use with the present interaction method (see Figure 2 for a summary)

### B.1 Button selection

Several methods can be used to select a "button" (the term "button" refers here to any determined region of the display (large or small, rectangular or not, graphically shown or not) that can be activated to launch a command or choose an option.

**B1.1 Clicking** The entrance of the cursor in the area can directly activate the selection of the button. For robustness, this method can be improved by specifying that it is necessary to activate the button that the cursor starts out of the button area and stops inside the button for a given number of frames.

**B.1.2 Waving:** If a persistent activity is measured in the area of the screen corresponding to the button (for instance for two seconds), the button is selected.

**B1.3 Special trajectory over the button area**. Other methods consist in performing a simple movement over the button area for instance **passing over the button region for instance from left to right,** or **performing a circular motion over it.**

**B1.4 Pop-up effect** Eventually, the selection can be done in two steps. The arrival of the cursor in the button region creates a second button near the first one (for instance with the word "select" or "go" on top of it). This second button can then be selected with one of the other method. This two step method is slightly longer but potentially more robust than the other ones.

### B.2 Single cursor Navigation components

### B.2.1 Directional vector / Joystick.

The cursor can be used as an end point of a vector starting at a reference point of the display (typically in the center). It is therefore easy to indicate a direction to the system for instance for navigating in a 2d map, controlling a vehicle in a game, similarly to what can be done with a joystick. Optionally, it is possible to link the speed of the browsing or the navigation with the length of the vector (for instance with a linear relation, an exponential function or a quadratic one). If the user puts the cursor near the reference point, the navigation will be slow, if it is far the navigation will be fast.

For convenience it is also possible to include a minimal length for the vector under which no movement occurs. In addition, to avoid that this kind of control occurs unexpectedly triggered by some far away movement, it could be decided that the cursor should not be activated under a given threshold of movement.

## B.2.2 Scrollbar / Potentiometers

It is possible to implement a component to perform the equivalent of a linear potentiometer for instance to create the kind of window's scrollbar commonly implemented in Graphical User Interfaces or simply to control a parameter. To set the value of the potentiometer/scrollbar two alternative methods can be used.

B2.2.1. The position of the potentiometer is directly set by the position of the cursor in the corresponding predefined area.

B2.2.2 The position of the potentiometer can be "pushed" by the cursor (like a physical one).

## B.3 Double cursor navigation components

Using two cursors the user can easily perform a new set of navigation gestures. For instance

**B.3.1 Zoom** Enlarge the distance between the two cursors to **zoom in** and alternatively reduce the distance between the two cursors to **zoom** out

**B.3.2 Translation** Move the two cursors in the same direction to perform a **translation**

**B.3.3 Rotation** Turn simultaneously the two cursors to perform a **rotation**

B.4 Direct Manipulation components

**B.4.1 Push Graphical elements can be pu**shed by the cursor and therefore more to special area of the display corresponding to different function (e.g. apply a particular program on the object moved, delete the object moved, etc.)

B.4.2 **Drag and Drop** Graphical elements can be selected like buttons (for instance with method B1.3 or B1.4) and then dropped somewhere else with a special trajectory (for instance a circular one). Similarly, the equivalent of a **"copy and paste"** function can easily be implemented.

## B.5 Special trajectories

## B.5.1 Command triggers

In addition, special gestures can be performed to trigger specific commands (confirmation of a selection, direct access to specific functionalities, etc.). Various state of the art methods exist to recognize and classifies cursor trajectories. Typically, the movement is first be segmented into chunks corresponding to individual gestures. To be more efficiently comparable, each gesture trajectory can then be resampled (the number of points typically depends on the speed of the gesture), rotated based on a indicative angle and scaled. The resulting trajectory can then be directly compared (for instance by computing the distance point to point of the consecutive points of the two transformed trajectories) to a database of stored trajectories corresponding to special gestures. The recognized gesture can be used to trigger a specific command.

## B.5.2 Environments for drawing and music composition

The system can be used to create complex tools for drawing, composing music or other creative activities. As an illustration, for drawing environments, the trajectory of the cursor(s) can just leave a trace on the display depending of some other options previously chosen (size of pencil, etc.). These options are for instance controlled by buttons selectable with any of the techniques previously mentioned. The cursor can leave a trace or not depending on the proximity of the hand to the display (evaluated for instance by the number of pixel above a give threshold after step 1). Similarly, the system can also be used for music composition interpreting for instance the trajectories as notes of a melody.

## B.5.3 Keyboard

Is also possible to design an "air" keyboard with which the user can type short texts. Different methods are possible. A standard (e.g. QWERTY) keyboard can be displayed and the user would press keys like buttons with one of the previously described methods. More efficiently, the user can just produce a continuous trajectory over the keyboard with his hand, as if he would type in a continuous manner. Based on a dictionary stored in the memory of the system, the system can then suggest various words matching roughly this trajectory. The user would just have to pick a word on this list, using for instance the potentiometer component. Eventually, other dynamic keyboards based on word suggestion can be implemented. For instance each time a user is selecting a letter, next possible letters (based on a dictionary) are presented on the screen (for instance scrolling from left to right). The user has just to direct his hand in the direction of the next letter to select it and so on.

This list of various interactive components is given as illustration purpose. Basically, **all the current interaction styles used in Graphical User Interfaces can be adapted to the present interaction system.**

**C description of some basic components for gesture-based interaction involving interactions with other objects**

As the system involves a standard infra-red camera, it can potentially recognize particular objects in its visual context using various machine vision techniques. Easily recognizable objects include any objects **with specific markers** (e.g. fiducial markers) or **with active infra-red illumination. Human faces** are also detectable with state-of-the-art methods. The system can associate to any of these objects a given **region** of its field of view. These region can be explicitly represented on the display, for instance by a frame corresponding to the frontiers of the detected object.

Some of these physical objects are passive (paper sheets) others can be potentially controlled by the system (TV, Hifi) for instance by wireless or wired connection or infra-red commands

As the system also detects cursors and trajectories, novel kinds of interactions involving one or several physical objects are possible.

**C.1 Interactions involving physical objects as frames of reference**

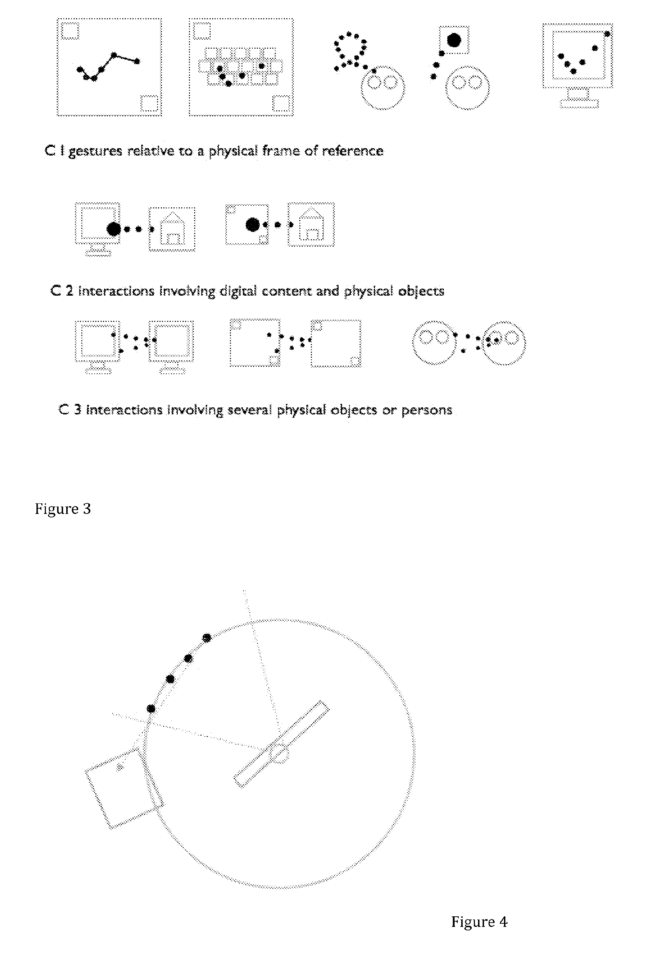

The object can be used as a frame of reference for the gesture performed. This means that the trajectory will be recorded by the system not in absolute position relative to the display but relatively to the object that acts as a frame of reference. Here is a non exhaustive list of interaction that such kind of system permits (see figure 3 for a summary) :

- **Gestures relative to a physical paper**. Using the method described in B.5.2 the user can draw virtually on a paper tagged with specific markers (for instance with a marker on the upper right corner and another on the lower left one). The drawing will therefore be attached to the marked paper and displayed at the corresponding position on the display. This is an example of so-called "augmented reality" application. Similarly the user can use a paper keyboard on which buttons are drawn to virtually type.

- **Gesture relative to a person/face.** Similarly a gesture can be interpreted relatively to a person or a face. The user can draw a mask "on top" of his face" and this mask will stay positioned relative his face later on. In an adventure game, the use can perform a gesture corresponding to a "spell" which effects is dependent on the position of his hands relative to his face. More generally the user can click on buttons that are positioned relatively to his face.

- **Gesture relative to a device**. A user can remotely control a device (e.g. switching on or off the TV, changing channels, etc.) by performing specific gestures near it or in front of it

**C.2 Interactions involving digital content on the display and physical objects**

(Active receptacles) Active receptacles are devices that can be receive commands from the system for instance by wireless or wired connection or infra-red commands (TV sets, digital photo frames, Hi-Fi systems, etc.) For instance a picture on the system's display can be "thrown" to the TV set by performing a unidirectional gestures starting from the object and finishing in direction of the receptacle. The system can compute the directional vector linking the center of the selected object and the end of the gesture and search for receptacle in this direction (alternatively it is possible to use a regression method based on the points of the trajectory). If a corresponding region is found a command can be sent to the device to perform a particular action (e.g. show the photo on the TV). This method can be applied to various kind of contents (music, image, files, data).

(Passive receptacles) Passive receptacles simply act as a physical memory to which content can be attached. A sheet of paper with specific markers or an object with specific Infra-red illumination can therefore be used to store music, images, files or data. To associate content with such objects the user can perform a gesture going from the source content on the display to the passive receptacles.

**C.3 Interactions involving several physical objects or individuals**

Gestures can also be used to link two physical objects together, for instance by performing a bidirectional gestures between them. These links can be displayed on the system. Linking two physical devices could be a way to indicate that the two systems should share commands (e.g. sound send to one speaker system should be sent to another one, image sent to one screen should be sent to another one). This kind of links permits to extend the effect of an action to a larger area as a local action on an object can have an effect on another "linked" object. Similarly linking two individual faces could be use to make explicit a relationship between two persons to the system.

**Note on the extension of the field of view of the system with a oriented system**

If the system has a fixed orientation, its area of interaction is limited by the field of view of the camera. In order to extend the area of interactivity the system can be made **oriented** (with or without motors). In its preferred embodiment, the invention features a pan tilt motorized display on which the detection system (infra.-red camera and led's) is mounted. In such conditions, any of the previously mentioned interaction is done relatively to pan and tilt coordinates of reference corresponding to the orientation of the system. The correspondence between the position on the camera and their position in the pan and tilt coordinate system can be obtained by the following formula:

$$\text{Pan (object)} = \text{pan(system)} + \text{alpha} * x \text{ (object)}$$

$$\text{Tilt (object)} = \text{tilt (system)} + \text{beta} * y \text{ (object)}$$

Alpha and beta are the foval transformation factors linked with particular lens used in the camera (they can be determined empirically)

The system can thus build a map of its environment in which each object corresponds to a region in the pan-tilt space. Gesture trajectories can be interpreted based on this map. For instance the user can "throw" a digital content to the TV (like in C.2) even if the TV is not directly in the field of view when the gesture is performed. Alternatively the user can just point in the direction of the physical object to indicate it to the system. To achieve such features, the system can compute the direction of the gesture (for instance by lineralizing it with a regression method) and evaluates the intersection of this direction of the regions corresponding to objects in the pan-tilt space (see figure 4). If the number of objects in the environment is not too big, this intersection can be just approximated.

**Claims**

1.   Man-machine interface method executed by an interactive device, comprising a display, an infra-red camera, an infra-red illumination system, this method executing the following steps :

    - capturing a first image by the camera with infra-red illumination
    - capturing a second image by the camera without infra-red illumination
    - Subtracting the two images to create a difference image
    - Creating a movement map using a high-pass filter to filter-out static part on a plurality of difference images
    - computing a barycentre of at least one region of the movement map,
    - Assigning at least one cursor based on the position of the barycentre movement,
    - Modifying information on the display based on the position of this cursor..

2.   Man-machine interface method of claim 1, wherein it comprises the steps of:

    - determining on the movement map at least two clusters,
    - assigning to each cluster a set of points of the movement map based on the probability that said point belongs to said cluster,
    - Assigning one cursor per cluster based on the position of the barycentre.

3.   Man-machine interface method of claim 1 or 2, wherein the movement map is thresholded before being used for the calculation of the barycentre.

**4.** Man-machine interface method of any of claims 1 to 3, wherein it comprises the steps of :

- calculating a smoothed cursor position using a plurality of previous cursor position,
- displaying the smoothed cursor position.

**5.** Man-machine interface method of claim 4, wherein it comprises the steps of:

- displaying a plurality of previous smoothed cursors position in function of the time.

**6.** Man-machine interface method of claims 1 to 3, wherein it comprises the steps of:

- displaying a plurality of previous cursors position in function of the time.

**7.** Man-machine interface method of any of claims 4 to 6, wherein it comprises the steps of :

- assigning a particular command based on the trajectory of the cursors and /or the position of the cursor.

**8.** Man-machine interface method of claim 7, wherein it comprises the steps of:

- recognizing a predefined pattern on the first, second or difference image,
- assigning a particular command based on the recognized image.

**9.** Man-machine interface method of any of claims 1 to 8, wherein it comprises a previous step of:

- acquiring a global image with the camera,
- determining the position of a user,
- limiting the further acquisition and treatment of the images on region around the user.

Figure 1

B1.1 "click"  B1.2 "wave"  B1.3 "special trajectory"  B1.4 "pop up"

B2.1 "joystick"  B2.2 "slider navigation"

B3.1 "zoom"  B3.2 "translate"  B3.3 "rotate"

B4.1 "push"  B4.2 "drag and drop"

B5.1 "special gestures"  B5.2 "drawing"  B5.2 "keyboard"

Figure 2

C 1 gestures relative to a physical frame of reference

C 2 interactions involving digital content and physical objects

C 3 interactions involving several physical objects or persons

Figure 3

Figure 4

Europäisches
Patentamt

European
Patent Office

Office européen
des brevets

**EUROPEAN SEARCH REPORT**

Application Number

EP 09 15 2867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/256072 A1 (UESHIMA HIROMU [JP] ET AL) 16 November 2006 (2006-11-16)<br>* abstract; figures 1,2,7,21 *<br>* paragraphs [0013], [0014], [0037], [0092], [0144], [0145], [0219] - [0221] * | 1-9 | INV.<br>G06F3/01<br>G06F3/042 |
| X | WO 2004/042666 A (DISNEY ENTPR INC [US]; SMOOT LANNY STARKES [US]; MCCARDLE WILLIAM JOSE) 21 May 2004 (2004-05-21)<br>* abstract; figures 1-3 *<br>* paragraphs [0012], [0036] - [0039], [0046] - [0049] * | 1-9 | |
| A | US 2008/062123 A1 (BELL MATTHEW [US]) 13 March 2008 (2008-03-13)<br>* abstract; figures 1,5A-5D *<br>* paragraphs [0026], [0057] *<br>* claims 1,5-8 * | 1-9 | |

TECHNICAL FIELDS
SEARCHED (IPC)

G06F

The present search report has been drawn up for all claims

| Place of search | Date of completion of the search | Examiner |
|---|---|---|
| Munich | 16 June 2009 | Pfaffelhuber, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 15 2867

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2009

| Patent document cited in search report | | Publication date | Patent family member(s) | | Publication date |
|---|---|---|---|---|---|
| US 2006256072 | A1 | 16-11-2006 | CN | 1816792 A | 09-08-2006 |
| | | | WO | 2005003945 A1 | 13-01-2005 |
| WO 2004042666 | A | 21-05-2004 | AU | 2003291320 A1 | 07-06-2004 |
| | | | EP | 1567234 A2 | 31-08-2005 |
| | | | JP | 4230999 B2 | 25-02-2009 |
| | | | JP | 2006505330 T | 16-02-2006 |
| US 2008062123 | A1 | 13-03-2008 | NONE | | |

EPO FORM P0459

For more details about this annex : see Official Journal of the European Patent Office, No. 12/82